# EUROPÄISCHE PATENTSCHRIFT

(11) **EP 4 569 241 B1**
(45) Veröffentlichungstag und Bekanntmachung des Hinweises auf die Patenterteilung: **07.10.2026**
(21) Anmeldenummer: 23745067.1
(22) Anmeldetag: 10.07.2023
(51) Int. Cl.: F16G 1/10, F16G 1/28

(54) **ANTRIEBSRIEMEN MIT LEITUNGSELEMENTEN**
DRIVE BELT WTH CONDUCTING ELEMENTS
COURROIE D'ENTRAÎNEMENT AVEC ÉLÉMENTS CONDUCTEURS

(30) Priorität: 08.08.2022 DE 102022208243
(43) Veröffentlichungstag der Anmeldung: 18.06.2025
(73) Patentinhaber: ContiTech Deutschland GmbH, 30175 Hannover (DE)
(72) Erfinder: FRANKE, Martin, 30175 Hannover (DE); BIRKNER, Nico, 30175 Hannover (DE); KUBIAK, Joanna, 30175 Hannover (DE); FISS, Tim, 30175 Hannover (DE); BORCHERS, Susann, 30175 Hannover (DE)
(74) Vertreter: Preusser, Andrea
(86) Internationale Anmeldenummer: PCT/DE2023/200139
(87) Internationale Veröffentlichungsnummer: WO 2024/032853

(56) Entgegenhaltungen:
- EP-A1- 1 674 419
- EP-A1- 3 587 329
- WO-A1-2010/057797
- WO-A1-2019/124457
- DE-A1- 10 232 965
- US-A1- 2019 071 282

## Beschreibung

Die Erfindung betrifft einen Antriebsriemen gemäß dem Oberbegriff des Anspruchs 1. Die Erfindung betrifft außerdem einen Linearantrieb und ein Regalbediengerät.

Antriebsriemen dienen in vielerlei Anwendungen und Bereichen dem Antrieb und der Kraftübertragung bei Arbeitsmaschinen, Transportmitteln, Fahrzeugen, etc., und zwar sowohl als umlaufende Antriebsriemen in einem Zugriementrieb als auch als Antriebsriemen endlicher Länge in einem Linearantrieb oder in einer Aufzugsanlage.

Insbesondere bei den linearen Antrieben werden mit Hilfe der dort eingesetzten Antriebsriemen Teile der jeweiligen Einrichtung bewegt, so beispielsweise bei einem in mehreren Richtungen bewegten Schlitten einer Arbeitsmaschine, etwa einer Fräsmaschine, eines Regalbediengerätes oder auch bei einem angetriebenen Druckkopf eines 3-D-Druckers.

Üblicherweise wird bei solchen Linearantrieben zur Energieübertragung und bzw. oder zur Übertragung von Mess- und Steuersignalen zusätzlich ein so genannter "Kabelschlepp" mitgeführt, im Wesentlichen zwischen dem bewegten Teil der Arbeitsmaschine und dem Antrieb bzw. der zentralen Steuerungseinrichtung, die auch die Signale der ebenfalls dort angeschlossenen feststehenden Bedieneinrichtungen verarbeitet. Der Begriff "Kabelschlepp", ursprünglich ein Firmenname, wird mittlerweile im Sinne einer allgemein verständlichen generischen Bezeichnung verwendet und bezeichnet eine Energieführungskette, mit der längere Kabel, Energiezuführungen und Steuerleitungen auf unterstützenden, beweglichen, kettenartigen Halterungen einer bewegten Maschine oder einer fahrbaren Einrichtung nachgeführt wird. Der Kabelschlepp fährt hier also mit dem bewegten Teil der Arbeitsmaschine mit, muss ggf. auch umgelenkt werden und benötigt entsprechenden Bauraum.

Alternativ können verschiedenste Ausführungsformen von Schleifkontakten, beispielsweise in Form von stromführenden Schienen zum Einsatz kommen. Schleifkontakte sind gegenüber Verschmutzungen besonders empfindlich, weshalb die Wartung der Schleifkontakte für eine zuverlässige Strom- und bzw. oder Signalübertragung sehr aufwändig und teuer ist.

Eine solche Energieführungskette unterliegt natürlich den entsprechenden Vorschriften in Bezug auf die Instandhaltung und Wartung und muss regelmäßig überprüft werden, ebenso wie der eigentliche Antrieb über Antriebsriemen. Die Einhaltung solcher Vorschriften erfordert daher regelmäßige Kontrolle und Wartung auch der Energieführungskette und beinhaltet also einen erheblichen zusätzlichen Aufwand.

Die DE 10 2012 011 230 A1 offenbart eine Vorrichtung zur Kraft- und bzw. oder Bewegungsübertragung, insbesondere für Fördergeräte, mit einem Antriebsriemen mit elektrisch leitfähigen Festigkeitsträgern, wobei die Festigkeitsträger dazu ausgebildet sind, elektrische Energie von einem Einkoppelelement über den Antriebsriemen an ein Auskoppelelement weiterzuleiten, um einen oder mehrere Antriebe mit elektrischer Energie zu versorgen. Nachteiliger Weise weisen die metallischen Festigkeitsträger eine zu geringe elektrische Leitfähigkeit und zu große Dämpfungseigenschaften auf, um eine optimale Übertragung von Datensignalen gewährleisten zu können. Datensignale müssen daher weiterhin über dafür vorgesehene Kabel übertragen werden, was mit den zuvor beschriebenen Nachteilen des Kabelschlepps verbunden ist.

Die EP 3 462 055 B1 offenbart eine Aufzugsanlage mit einem Traggurt als Antriebsriemen mit Zugträgern zur Signal- oder Datenübertragung. Das Einspeisen oder Auslesen der Signale oder Daten zwischen Signalleitungselementen und weitergehenden Leitungen oder Signalverarbeitungseinrichtungen erfolgt über Kontaktierungen an den jeweiligen endseitigen Anschluss- oder Befestigungspunkten der Signalleitungselemente über eine Kabelklemme. Nachteiliger Weise weisen die Zugträger wie zuvor beschrieben eine zur Übertragung von Datensignalen unzureichende elektrische Leitfähigkeit und eine zu große Dämpfung auf, weshalb die Übertragung von Signalen oder Daten nicht verlässlich erfolgen kann. Ein weiterer Nachteil besteht in einem aufwändigen Verfahren zur Kontaktierung der Zugträger, da jeder einzelne der Zugträger vor der elektrischen Kontaktierung manuell von dem diesen umgebenen elastomeren Material befreit werden muss. Um die Gefahr eines Kurzschlusses zu umgehen, müssen die Zugträger wiederum gegeneinander isoliert werden, um anschließend mit der Kabelklemme verbunden zu werden. Eine derartig aufwendige Kontaktierung der Zugträger führt zu entsprechend hohen Herstellungskosten.

Ein weiteres Beispiel findet sich in US2019/071282A1. Der in diesem Dokument beschriebene Sensor wird als zweites Leitungselement zur Datenübertragung angesehen jedoch enthält dieses Dokument keinerlei Angaben über die unterschiedliche Dämpfung der verschiedenen Leitungselemente.

Der Erfindung liegt die Aufgabe zugrunde, einen Antriebsriemen, zum Beispiel für einen Linearantrieb bereitzustellen, der sowohl zur Übertragung von Strom als auch zur Übertragung von Datensignalen ausgebildet ist.

Zusätzlich oder alternativ soll die Qualität der Übertragung von Datensignalen durch den Antriebsriemen weiter verbessert werden.

Zusätzlich oder alternativ soll die Kontaktierung der Zugträger schnell und bzw. oder kostengünstig und bzw. oder automatisierbar erfolgen.

Eine weitere Aufgabe liegt in der Bereitstellung eines Linearantriebs mit einem Antriebsriemen und in der Bereitstellung eines Regalbediengeräts mit einem Linearantrieb, wobei zur Übertragung von Strom und Datensignalen kein zusätzlicher Kabelschlepp benötigt werden soll.

Die Lösung dieser Aufgabe ergibt sich durch einen Antriebsriemen mit den Merkmalen des unabhängigen Anspruchs 1.

Eine weitere Lösung der Aufgabe ergibt sich durch einen Linearantrieb mit einem erfindungsgemäßen Antriebsriemen.

Anspruch 14 betrifft außerdem ein Regalbediengerät mit einem erfindungsgemäßen Linearantrieb.

Weitere vorteilhafte Ausbildungen sind in den abhängigen Ansprüchen offenbart. Weitere Vorteile und Merkmale sind der allgemeinen Beschreibung sowie den Ausführungsbeispielen zu entnehmen.

Die vorliegende Anmeldung betrifft einen Antriebsriemen, aufweisend ein in ein polymeres Material eingebettetes erstes Leitungselement zur Übertragung von elektrischer Energie, wobei das erste Leitungselement durch wenigstens einen sich in Längsrichtung des Antriebsriemens erstreckenden Zugträger, vorzugsweise eine Vielzahl sich in Längsrichtung des Antriebsriemens erstreckenden parallel zueinander angeordneten Zugträgern gebildet ist.

Mit anderen Worten kann der Zugträger, welcher aus einem elektrisch leitfähigen Material, vorzugsweise aus Metall gebildet sein kann, neben der eigentlichen Aufgabe der Kraftübertragung zusätzlich Strom führen. Auf diese Weise kann Strom von einer Energiequelle über den Antriebsriemen zu einem Verbraucher, beispielsweise einem Elektromotor eines Stellantriebs geleitet werden, ohne dass zusätzliche Kabel zur Stromführung erforderlich sind. Vorzugsweise ist das polymere Material des Antriebsriemens ein Polyurethan.

Neben dem Zugträger als erstes Leitungselement zur Stromführung weist der Antriebsriemen wenigstens ein zweites Leitungselement zur Übertragung von Daten auf. Das zweite Leitungselement weist ein Substrat mit darauf gedruckten Leiterbahnen auf. Die Leiterbahnen können über allgemein bekannte Druckverfahren mit einer elektrisch leitfähigen Tinte auf das Substrat aufgebracht werden. Die elektrische Leitfähigkeit und die Dämpfungseigenschaften der Leiterbahnen kann durch Auswahl eines geeigneten elektrisch leitfähigen Materials der Tinte beeinflusst werden. Für eine verbesserte Signalübertragung weist das zweite Leitungselement eine im Vergleich zum ersten Leitungselement geringere Dämpfung auf. Als elektrisch leitfähiges Material der Tinte ist insbesondere Kupfer, Silber oder Gold geeignet. Das elektrisch leitfähige Material kann entweder in Reinform, in Partikelform oder in Form einer Dispersion vorliegen. Das zweite Leitungselement ist zur Übertragung von Daten, beispielsweise von Sensordaten zur Steuerung und Überwachung der Position des Elektromotors des Stellantriebs ausgebildet. Das zweite Leitungselement kann auf der Oberfläche des Antriebsriemens appliziert oder als integraler Bestandteil des Antriebsriemens in das polymere Material des Antriebsriemens eingebettet sein.

Es zeigt sich als besonders vorteilhaft, dass ein separater Kabelschlepp oder eine Energieführungskette, die als separate Elemente mit sich bewegenden Einrichtungen oder Maschinenteilen mitbewegt und geführt werden müssen, entfallen kann. Dementsprechend kann auch die Wartung für solche Systeme zusammen mit der Wartung für den Antriebsriemen ausgeführt werden. Ein weiterer Vorteil besteht darin, dass die elektrische Leitfähigkeit und bzw. oder die Dämpfungseigenschaften der gedruckten Leiterbahnen durch eine gezielte Auswahl der Bestandteile der elektrisch leitfähigen Tinte an die erforderliche Qualität der zu übertragenen Daten angepasst werden kann. Mit anderen Worten kann die Qualität der Datenübertragung mit einfachen Mitteln gezielt beeinflusst werden, ohne dass die mechanischen Eigenschaften des Antriebsriemens beeinflusst werden.

Gemäß einem weiteren Aspekt der vorliegenden Erfindung ist der Antriebsriemen als Zahnriemen, Flachriemen, Keilriemen oder Keilrippenriemen ausgebildet. Die eingangs erläuterten Eigenschaften und Vorteile können so auf verschiedene Arten von Antriebsriemen übertragen werden.

Gemäß einem weiteren Aspekt der vorliegenden Anmeldung ist der Antriebsriemen ein nicht geschlossener Antriebsriemen mit einer vorbestimmten Länge und zwei Enden. Auf besonders vorteilhafte Weise kann der Antriebsriemen durch Zuschneiden in beliebigen Längen bereitgestellt werden, ohne dass für die Herstellung eines längenspezifischen Antriebsriemens Kosten für individuelle Werkzeuge anfallen.

Gemäß einem weiteren Aspekt der vorliegenden Erfindung weist das Substrat das polymere Material des Antriebsriemens auf. Vorzugsweise besteht das Substrat aus dem polymeren Material des Antriebsriemens. Auf vorteilhafte Weise kann hierdurch eine verbesserte Anbindung des Substrats an das polymere Material des Antriebsriemens ermöglicht werden, wobei sich das Substrat mit dem polymeren Material des Antriebsriemens unter Einwirkung von Wärme stoffschlüssig verbinden kann. Das Substrat kann auf diese Weise ein integraler Bestandteil des Antriebsriemens sein, wodurch der Antriebsriemen seine ursprünglichen mechanischen Eigenschaften beibehalten kann.

Gemäß einem weiteren Aspekt der vorliegenden Erfindung ist das Substrat und insbesondere die Leiterbahnen in das polymere Material des Antriebsriemens eingebettet. Es zeigt sich als besonders vorteilhaft, dass das Substrat und die darauf applizierten Leiterbahnen durch das polymere Material des Antriebsriemens vor äußeren Einflüssen, wie zum Beispiel mechanischer Abrasion oder anderen Umwelteinflüssen geschützt werden kann. Die Datenübertragung kann so besonders zuverlässig über die Lebensdauer des Antriebsriemens sichergestellt werden.

Gemäß einem weiteren Aspekt der vorliegenden Erfindung weist der Antriebsriemen wenigstens einen Anschlussadapter auf, der insbesondere an einem Ende des Antriebsriemens, bevorzugt an einer Stirnseite des Antriebsriemens angeordnet ist, wobei das erste Leitungselement und das zweite Leitungselement in dem Anschlussadapter zum Einspeisen und bzw. oder Abgreifen der elektrischen Energie und der Daten zusammengeführt sind. Mit anderen Worten kann der Anschlussadapter als ein genormter Stecker, beispielsweise als CAN-Bus Stecker ausgebildet sein. Der Antriebsriemen kann vorzugsweise jeweils an dem ersten Ende und an dem zweiten Ende den Anschlussadapter aufweisen. Der Anschlussadapter kann auf vorteilhafte Weise die Anzahl an Pins aufweisen, die der Summe der Anzahl des Zugträgers des ersten Leitungselements und der Leiterbahnen des zweiten Leitungselements entspricht. Es zeigt sich als besonders vorteilhaft, dass ein Pin des Anschlussadapters des ersten Endes des Antriebsriemens einem entsprechenden Pin des Anschlussadapters des zweiten Endes zugeordnet sein kann und elektrisch leitend mit diesem verbunden ist. Dadurch kann der Anschlussadapter auf besonders vorteilhafte Weise mit Einrichtungen wie beispielsweise einer Spannungsversorgung und bzw. oder einer Steuerungseinrichtung einer Maschine verbunden werden. Weiterhin kann der Antriebsriemen über eine genormte Schnittstelle als Übertragungsvorrichtung für Strom und Daten einfach und ohne weiteren konstruktiven Aufwand in bestehende Systeme integriert werden.

Gemäß einem weiteren Aspekt der vorliegenden Erfindung weist der Antriebsriemen wenigstens ein Kontaktierungselement auf, mit dem das erste Leitungselement endseitig elektrisch verbunden ist, wobei das Kontaktierungselement das erste Leitungselement mit dem Anschlussadapter verbindet. Der Antriebsriemen kann vorzugsweise jeweils an dem ersten Ende und an dem zweiten Ende das Kontaktierungselement aufweisen. Es zeigt sich als besonders vorteilhaft, dass über das Kontaktierungselement eine Schnittstelle bereitgestellt werden kann, mit der das erste Leitungselement bzw. der Zugträger mit weiteren Einrichtungen zur Stromeinspeisung und bzw. oder zur Stromentnahme elektrisch leitfähig verbunden werden kann.

Gemäß einem weiteren Aspekt der vorliegenden Erfindung ist das Kontaktierungselement mit einem in den Anschlussadapter mündenden Kabel verbunden. Das Kabel kann als ein Flachbandkabel ausgebildet sein. Mit anderen Worten kann das erste Leitungselement durch das Kabel über eine räumliche Distanz mit dem Kontaktierungselement elektrisch leitfähig verbunden werden. Es zeigt sich als besonders vorteilhaft, dass der Anschlussadapter an Stelle des biegesteifen Zugträgers des ersten Leitungselements mit dem biegeflexiblen Kabel verbunden werden kann, wodurch die Verbindung des ersten Leitungselements mit dem Anschlussadapter auch bei dynamischer mechanischer Belastung zuverlässig bestehen bleibt.

Gemäß einem weiteren Aspekt der vorliegenden Erfindung weist das Kontaktierungselement wenigstens ein Paar, vorzugsweise eine Vielzahl von in Querrichtung angeordneten Paaren mit sich in vertikaler Richtung erstreckender gabelförmiger Zinken zur Aufnahme wenigstens eines sich in Längsrichtung des Antriebsriemens erstreckenden Zugträgers, vorzugsweise einer Vielzahl sich in Längsrichtung des Antriebsriemens erstreckenden parallel zueinander angeordneten Zugträgern auf. Das Kontaktierungselement ist in vertikaler Richtung in das polymere Material eingeführt. Vorzugsweise kann das Kontaktierungselement Paare gabelförmiger Zinken in der Anzahl der vorhandenen Zugträger aufweisen. Mit anderen Worten kann das Kontaktierungselement elektrisch leitfähig mit dem Zugträger des Antriebsriemens verbunden werden, ohne dass der Zugträger von dem polymeren Material des Antriebsriemens befreit werden muss. Der Abstand zweier gabelförmiger Zinken eines Paares in Querrichtung zueinander kann dabei höchstens dem Durchmesser des Zugträgers entsprechen. Vorzugsweise entspricht der Abstand zweier gabelförmiger Zinken eines Paares in Querrichtung zueinander 80 Prozent des Durchmessers des Zugträgers. Auf besonders vorteilhafte Weise kann bei einem Abstand zweier gabelförmiger Zinken kleiner des Durchmessers des Zugträgers ein besonders guter elektrisch leitfähiger Kontakt zwischen dem Zugträger und dem Kontaktierungselement hergestellt werden. Durch eine eventuelle Deformation des Zugträgers auf den Abstand des Paares gabelförmiger Zinken, zwischen denen der Zugträger aufgenommen werden kann, vergrößert sich auf vorteilhafte Weise die Kontaktfläche zwischen dem Zugträger und dem Paar gabelförmiger Zinken des Kontaktierungselementes. In dem Kontaktbereich zwischen dem Zugträger und dem Paar gabelförmiger Zinken befindet sich kein polymeres Material. Die Paare gabelförmiger Zinken können zueinander in dem Abstand der Zugträger angeordnet sein. So kann sichergestellt werden, dass jedem Paar gabelförmiger Zinken ein Zuträger zugeordnet ist und bzw. oder der Zugträger beim Einführen des Kontaktierungselementes in das polymere Material das Antriebsriemens nicht beschädigt wird und bzw. oder die Position des Zugträgers im Antriebsriemen verändert wird. Ein Paar gabelförmiger Zinken kann jedoch auch mehrere Zugträger aufnehmen bzw. kontaktieren. Um das Einführen des Kontaktierungselementes in das polymere Material des Antriebsriemens mit möglichst geringer Kraft zu ermöglichen kann das polymere Material und bzw. oder das Kontaktierungselement erwärmt werden. Das polymere Material kann durch den Wärmeeinfluss erweichen, wodurch sich der Widerstand des polymeren Materials gegen das Einführen der gabelförmigen Zinken des Kontaktierungselements verringern kann. Zusätzlich können die gabelförmigen Zinken des Kontaktierungselements messerähnliche Schneiden aufweisen, die zusätzlich ein Einführen des Kontaktierungselements in das polymere Material vereinfachen.

Gemäß einem weiteren Aspekt der vorliegenden Erfindung weist das Kontaktierungselement wenigstens eine zylindrische Hülse zur Aufnahme eines Zugträgers auf. Die zylindrische Hülse ist in Längsrichtung in das polymere Material eingeführt und umschließt den Zugträger auf einer Teillänge in Längsrichtung, wobei die zylindrische Hülse auf den Zugträger verpresst ist. Besonders bevorzugt weist der Antriebsriemen zylindrische Hülsen in der Anzahl der vorhandenen Zugträger auf, sodass jeder Zugträger eine zylindrische Hülse als Kontaktierungselement aufweist. Mit anderen Worten kann die zylindrische Hülse elektrisch leitfähig mit dem Zugträger des Antriebsriemens verbunden werden, ohne dass der Zugträger von dem polymeren Material des Antriebsriemens befreit werden muss. Um das Einführen der zylindrischen Hülse in das polymere Material des Antriebsriemens mit möglichst geringer Kraft zu ermöglichen kann das polymere Material und bzw. oder die zylindrische Hülse erwärmt werden. Das polymere Material kann durch den Wärmeeinfluss erweichen, wodurch sich der Widerstand des polymeren Materials gegen das Einführen der zylindrischen Hülse verringern kann. Durch ein Einleiten einer Kraft in den Antriebsriemen in vertikaler Richtung wird die zylindrische Hülse mit dem Zugträger verpresst. So kann die elektrisch leitfähige Verbindung zwischen der zylindrischen Hülse und dem Zugträger verbessert und unter dynamischer Belastung des Antriebsriemens dauerhaft sichergestellt werden. In dem Kontaktbereich zwischen dem Zugträger und der zylindrischen Hülse befindet sich kein polymeres Material.

Gemäß einem weiteren Aspekt der vorliegenden Erfindung weist das Kontaktierungselement wenigstens einen Dorn auf, der in Längsrichtung in den Zugträger eingeführt ist. Um das Einführen des Dorns in den Zugträger des Antriebsriemens mit möglichst geringer Kraft zu ermöglichen kann das polymere Material des Antriebsriemens und bzw. oder der Dorn erwärmt werden. Das polymere Material kann durch den Wärmeeinfluss erweichen, wodurch sich der Widerstand des polymeren Materials gegen ein Aufweiten des Durchmessers des Zugträgers beim Einführen des Dorns in den Zugträger verringern kann. Der Dorn ist bevorzugt mit einer zulaufenden Außenkontur, z.B. kegelförmig, ausgebildet, sodass die Kraft zum Einführen des Dorns in den Zugträger zusätzlich verringert werden kann. Besonders bevorzugt weist der Antriebsriemen Dorne in der Anzahl der vorhandenen Zugträger auf, sodass jeder Zugträger einen Dorn als Kontaktierungselement aufweist. Es zeigt sich als besonders vorteilhaft, dass die Kontaktfläche zwischen Zugträger und dem darin eingeführten Dorn zur Bildung einer elektrisch leitfähigen Verbindung besonders groß ist. Durch Einführen des Dorns in den Zugträger kann sämtlicher Kontakt des Dorns mit dem elektrisch isolierenden polymeren Material des Antriebsriemens vermieden werden. Mit anderen Worten kann der Kontaktwiderstand zwischen Dorn und Zugträger besonders vorteilhaft möglichst geringgehalten werden, wodurch elektrische Verluste bei Stromführung ebenfalls gering ausfallen können.

Gemäß einem weiteren Aspekt der vorliegenden Erfindung weist das Kontaktierungselement wenigstens eine insbesondere U-förmig ausgebildete Klammer auf, die in vertikaler Richtung in das polymere Material eingeführt ist und den Zugträger kontaktierend umgibt. Mit anderen Worten kann das Kontaktierungselement als ein U-förmiger Draht ausgebildet sein. Der Draht kann dabei mit einem U-förmigen Radius ausgebildet sein, der dem Außendurchmesser des Zugträgers entspricht. Der Draht kann als U geformt mit einem ersten Drahtende und einem zweiten Drahtende in vertikaler Richtung in das polymere Material des Antriebsriemens eingeführt werden, sodass ein Zugträger zwischen dem ersten Drahtende und dem zweiten Drahtende aufgenommen wird. Der Draht kann den Antriebsriemen in vertikaler Richtung durchgreifen, sodass das erste Drahtende und das zweite Drahtende auf der gegenüberliegenden Seite aus dem Antriebsriemen herausragen. Der Draht kann, beispielsweise durch das Anlegen einer elektrischen Spannung erwärmt werden, wodurch das polymere Material des Antriebsriemens erweicht oder aufgeschmolzen werden kann, wodurch der U-förmig geformte Teil des Drahts mit geringem Kraftaufwand durch das polymere Material hindurch bis zu dem Zugstrang bewegt werden kann und ein elektrisch leitfähiger Kontakt zwischen dem Draht und dem Zugstrang gebildet werden kann. Die Eindringstelle des Drahts in dem polymeren Material des Antriebsriemens kann durch ein Erwärmen des Drahts und das den Draht umgebene polymere Material, wie zuvor beschrieben, wieder verschlossen werden. Der Zugträger kann über das erste Drahtende und das zweite Drahtende mit weiteren Einrichtungen zur Stromeinspeisung und bzw. oder zur Stromentnahme elektrisch leitfähig verbunden werden. Besonders bevorzugt weist der Antriebsriemen Klammern bzw. Drähte in der Anzahl der vorhandenen Zugträger auf, sodass jedem Zugträger eine Klammer bzw. ein Draht als Kontaktierungselement zugeordnet ist.

Die Anmeldung betrifft außerdem einen Linearantrieb mit einem erfindungsgemäßen Antriebsriemen. Der Linearantrieb kann neben dem Antriebsriemen einen Antrieb, z. B. in Form eines Elektromotors, wenigstens eine durch den Antriebsriemen umschlungene Riemenscheibe und eine linear entlang des Antriebsriemens bewegliche Plattform umfassen. Die zuvor genannten Eigenschaften und Vorteile lassen sich so auf verschiedenste Ausführungen von Linearantrieben übertragen.

Die Anmeldung betrifft weiterhin ein Regalbediengerät mit einem erfindungsgemäßen Linearantrieb. Insbesondere bei Regalbediengeräten besteht eine Anforderung darin, die Masse des Linearantriebs möglichst gering zu halten, um möglichst hohe Lasten transportieren zu können. Mit anderen Wortenkann eine Gewichtseinsparung des Linearantriebs durch die erfindungsgemäße Lösung aufgrund nicht mehr benötigter separater Kabel zur Versorgung eines elektrischen Antriebs oder zur Übertragung von Datensignalen eines Sensors unmittelbar zu einer Erhöhung der Nutzlast des Regalbediengeräts führen.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 und bzw. oder den übrigen unabhängigen Ansprüchen 13 und 14 kombinierbar sind.

Anhand der Figuren werden im Folgenden Ausführungsbeispiele der Erfindung schematisch dargestellt und näher erläutert.

Die Figuren 1a und 1b zeigen eine schematische Darstellung eines erfindungsgemäßen Antriebsriemens im Querschnitt gemäß eines ersten Ausführungsbeispiels zur Kontaktierung eines ersten Leitungselements.

Die Figuren 2a, 2b und 2c zeigen eine schematische Darstellung eines erfindungsgemäßen Antriebsriemens gemäß eines zweiten Ausführungsbeispiels zur Kontaktierung eines ersten Leitungselements.

Die Figuren 3a und 3b zeigen eine schematische Darstellung eines erfindungsgemäßen Antriebsriemens gemäß eines dritten Ausführungsbeispiels zur Kontaktierung eines ersten Leitungselements in einer Seitenansicht.

Die Figuren 4a und 4b zeigen eine schematische Darstellung eines erfindungsgemäßen Antriebsriemens im Querschnitt gemäß eines vierten Ausführungsbeispiels zur Kontaktierung eines ersten Leitungselements.

Die Figur 5 zeigt einen erfindungsgemäßen Antriebsriemen mit einem ersten Leitungselement und einem Anschlussadapter in einer schematischen Darstellung. Die Figur 6 zeigt den erfindungsgemäßen Antriebsriemen aus Fig. 5 mit einem zweiten Leitungselement und einem Anschlussadapter in einer schematischen Darstellung.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

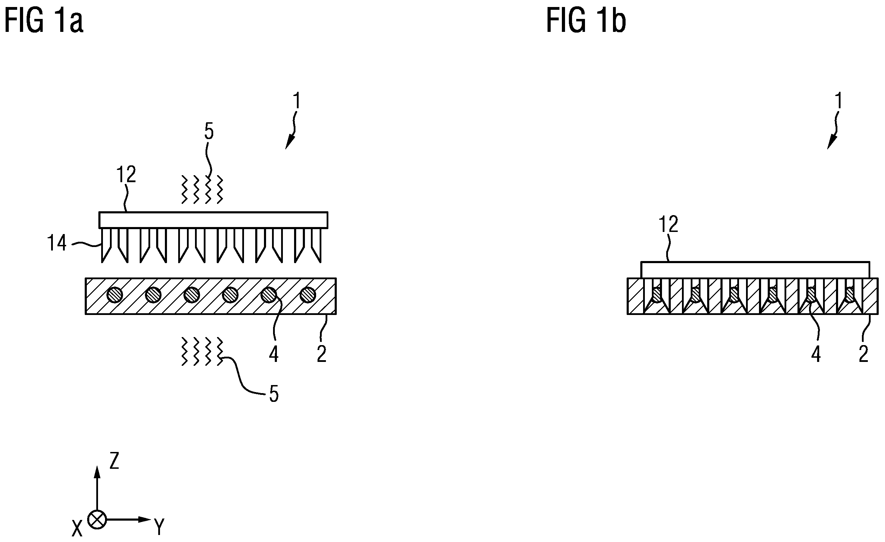

Figur 1a zeigt eine erste Ausführungsform des erfindungsgemäßen Antriebsriemens 1, aufweisend ein in ein polymeres Material 2 eingebettetes erstes Leitungselement 4 zur Übertragung von elektrischer Energie, wobei das erste Leitungselement 4 durch wenigstens einen sich in Längsrichtung X des Antriebsriemens 1 erstreckenden Zugträger 4, vorzugsweise eine Vielzahl sich in Längsrichtung X des Antriebsriemens 1 erstreckenden parallel zueinander angeordneten Zugträgern 4, gebildet ist. Zur Übertragung von Daten weist der Antriebsriemen 1 wenigstens ein zweites Leitungselement 6 auf. Das zweite Leitungselement 6 weist ein Substrat 7 mit darauf gedruckten Leiterbahnen 8 auf. Der Antriebsriemen 1 weist ein Kontaktierungselement 12 mit sechs Paaren gabelförmiger Zinken 14 auf, wobei das Kontaktierungselement 12 ausgebildet ist, elektrisch leitfähig mit dem Zugträger 4 verbunden zu werden. Die gabelförmigen Zinken 14 erstrecken sich in vertikaler Richtung Z und sind in einer Querrichtung Y in Form von sechs Paaren angeordnet. Das dargestellte Ausführungsbeispiel weist sechs Paare bzw. zwölf gabelförmige Zinken 14 auf. Der schematisch dargestellte Antriebsriemen 1 weist sechs Zugträger 4 auf, welche in ein polymeres Material 2, vorzugsweise Polyurethan, eingebettet sind. Die Zugträger 4 bilden ein erstes Leitungselement 4 zur Stromübertragung und weisen einen metallischen Werkstoff auf. Die Zugträger 4 erstrecken sich in Längsrichtung X des Antriebsriemens 1 und sind in Querrichtung Y zueinander beabstandet angeordnet. Der Abstand zweier gabelförmiger Zinken 14 eines Paares in Querrichtung Y zueinander entspricht 80 Prozent des Durchmessers der Zugträgers. Die Paare gabelförmiger Zinken 14 sind zueinander in dem Abstand der Zugträger 4 angeordnet. So ist jedem Paar gabelförmiger Zinken 14 ein Zuträger 4 zugeordnet. Durch ein Ausrichten der gabelförmigen Zinken 14 zu den Zugträgern 4 werden die Zugträger 4 bei einem Einführen des Kontaktierungselementes 12 in das polymere Material 2 des Antriebsriemens 1 nicht beschädigt. Das polymere Material 2 des Antriebsriemens 1 und das Kontaktierungselement 12 werden durch eine Wärmequelle 5 erhitzt. Das Erhitzen bewirkt, dass das polymere Material 2 erweicht und einem Einführen des Kontaktierungselements 12 in das polymere Material 2 einen geringeren Widerstand entgegensetzt, wodurch das Einführen des Kontaktierungselements 12 in das polymere Material 2 in vertikaler Richtung Z mit geringem Kraftaufwand erfolgen kann.

Figur 1b zeigt den Antriebsriemen 1 und das Kontaktierungselement 12 aus Fig. 1a, wobei das Kontaktierungselement 12 in das polymere Material 2 des Antriebsriemens 1 eingeführt wurde und elektrisch leitfähig mit dem Zugträger 4 verbunden ist. Die Paare gabelförmiger Zinken 14 nehmen jeweils einen Zugträger 4 zwischen sich auf. Das Kontaktierungselement 12 kann elektrisch leitfähig mit den Zugträgern 4 des Antriebsriemens 1 verbunden werden, ohne dass die Zugträger 4 von dem polymeren Material 2 des Antriebsriemens 1 befreit werden müssen. Dadurch, dass der Abstand der Paare gabelförmiger Zinken 14 zueinander kleiner ist als der Durchmesser der Zugträger 4, werden die Zugträger 4 zwischen den Paaren gabelförmiger Zinken 14 verformt, wodurch sich die Kontaktfläche zwischen dem Zugträger 4 und dem Paar gabelförmiger Zinken 14 des Kontaktierungselementes 12 vergrößert.

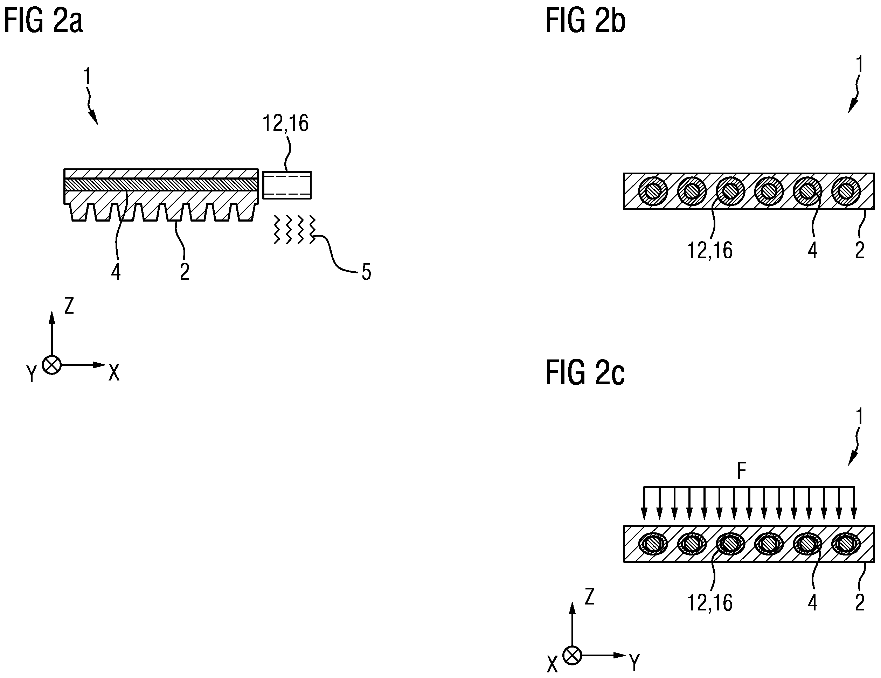

Figur 2a zeigt eine weitere Ausführungsform des erfindungsgemäßen Antriebsriemens 1 in Form eines Zahnriemens in der Seitenansicht. Das Kontaktierungselement 12 als eine zylindrische Hülse 16 zur Aufnahme eines Zugträgers 4 ausgebildet. Die zylindrische Hülse 16 wird in Längsrichtung X in das polymere Material 2 des Antriebsriemens 1 eingeführt und umschließt den Zugträger 4 auf einer Teillänge in Längsrichtung X. Um das Einführen der zylindrischen Hülse 16 zu erleichtern, wird das polymere Material 2 des Antriebsriemens 1 und die zylindrische Hülse 16 durch die Wärmequelle 5 erhitzt.

Figur 2b zeigt das Ausführungsbeispiel aus Figur 2a in einem Querschnitt dargestellt. Dabei ist zu erkennen, dass jedem Zugträger 4 jeweils eine zylindrische Hülse 16 als Kontaktierungselement 12 zugeordnet ist.

Figur 2c zeigt, dass die zylindrischen Hülsen 16 durch das Einleiten einer Kraft F in den Antriebsriemen 1 in vertikaler Richtung Z plastisch verformt und elektrisch leitfähig mit den Zugträgern 4 verbunden sind. In dem Kontaktbereich zwischen dem Zugträger 4 und der zylindrischen Hülse 16 befindet kein polymeres Material 2.

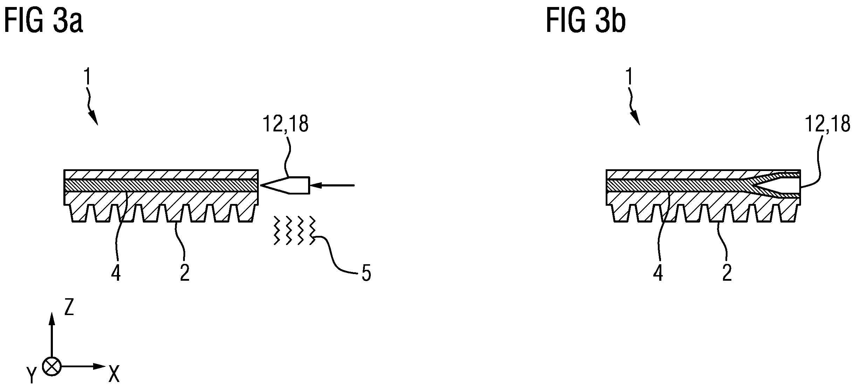

Figur 3a zeigt eine weitere Ausführungsform des erfindungsgemäßen Antriebsriemens 1 in Form eines Zahnriemens in einer Seitenansicht, wobei das Kontaktierungselement 12 als ein Dorn 18 ausgebildet ist. Um die für das Einführen des Dorns 18 in Längsrichtung X in den Zugträger 4 des Antriebsriemens 1 erforderliche Kraft möglichst gering zu halten, wird der Dorn 18 durch eine Wärmequelle 5 erwärmt. Das polymere Material 2 kann durch den Wärmeeinfluss erweichen, wodurch sich der Widerstand des polymeren Materials 2 gegen ein Aufweiten des Durchmessers des Zugträgers 4 beim Einführen des Dorns 18 in den Zugträger 4 verringert. Der Durchmesser des Dorns 18 erweitert sich kegelförmig, sodass die erforderliche Kraft zum Einführen des Dorns 18 in den Zugträger 4 zusätzlich verringert wird. Der Antriebsriemen 1 weist Dorne 18 in der Anzahl der vorhandenen Zugträger 4 auf, sodass jeder Zugträger 4 einen Dorn 18 als Kontaktierungselement 12 aufweist.

Figur 3b zeigt den Antriebsriemen 1 aus Figur 3a, wobei der Dorn 18 in Längsrichtung X in den Zugträger 4 eingeführt ist. Der Zugträger 4 hat sich in dem Bereich um den Dorn 18 herum in dem Durchmesser aufgeweitet. Der Dorn 18 ist im Wesentlichen von dem Zugträger umgeben. Durch den Kontakt des Dorns 18 mit dem Zugträger 4 ist zwischen dem Dorn 18 und dem Zugträger 4 eine elektrisch leitfähige Verbindung gebildet.

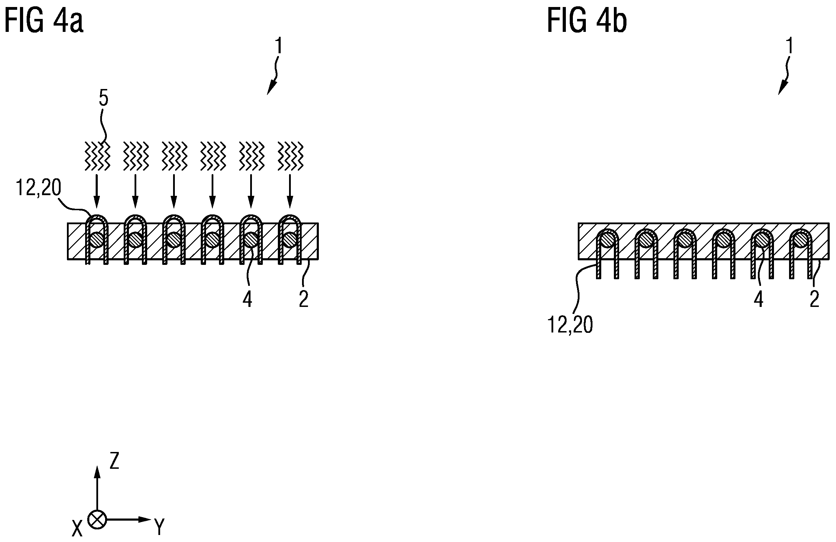

Figur 4a zeigt eine weitere Ausführungsform des erfindungsgemäßen Antriebsriemens 1 im Querschnitt, wobei das Kontaktierungselement 12 als ein U-förmiger Draht 20 ausgebildet ist. Der Draht 20 ist als U geformt mit einem ersten Drahtende und einem zweiten Drahtende in vertikaler Richtung Z in das polymere Material 2 des Antriebsriemens 1 eingeführt, sodass ein Zugträger 4 zwischen dem ersten Drahtende und dem zweiten Drahtende aufgenommen wird. Der Draht 20 durchgreift den Antriebsriemen 1 in vertikaler Richtung Z, sodass das erste Drahtende und das zweite Drahtende auf der gegenüberliegenden Seite aus dem Antriebsriemen 1 herausragen. Der Draht 20 wird, beispielsweise durch das Anlegen einer elektrischen Spannung an dem ersten Drahtende und dem zweiten Drahtende erwärmt, wodurch das polymere Material 2 des Antriebsriemens 1 erweicht oder aufschmilzt, wodurch der U-förmig geformte Teil des Drahts 20 mit geringem Kraftaufwand durch das polymere Material 2 hindurch bis zu dem Zugstrang 4 bewegt wird. Der Antriebsriemen 1 weist Drähte 20 in der Anzahl der Zugträger 4 auf, sodass jedem Zugträger 4 ein Draht 20 als Kontaktierungselement 12 zugeordnet ist.

Figur 4b zeigt den Antriebsriemen 1 aus Figur 4a, wobei die Drähte 4 in vertikaler Richtung Z in das polymere Material 2 des Antriebsriemens 1 so weit eingeführt sind, dass die Zugträger 4 durch die Drähte 20 U-förmig umgeben sind und ein elektrisch leitfähiger Kontakt zwischen dem Draht 20 und dem Zugstrang 4 gebildet wird. Der U-förmige Radius des Drahts 20 entspricht dem Außendurchmesser des Zugträgers 4.

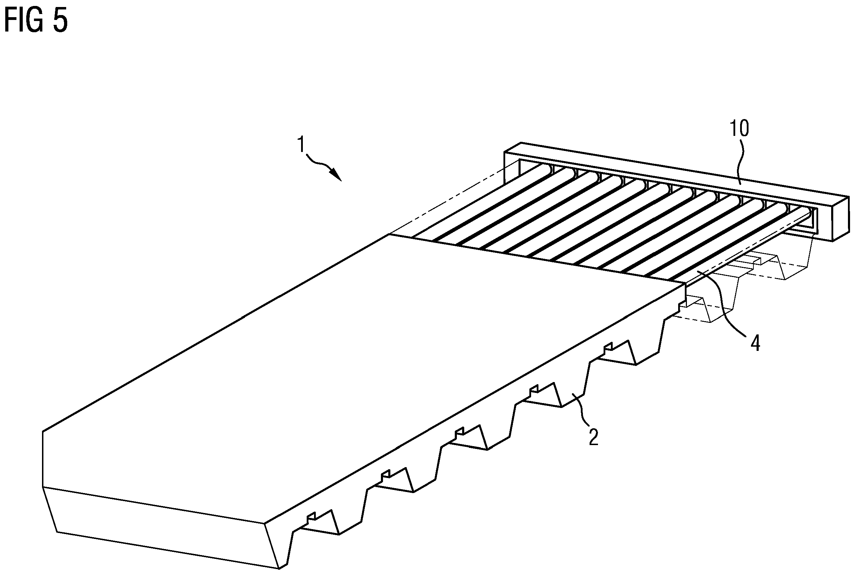

Figur 5 zeigt eine weitere Ausführungsform des erfindungsgemäßen Antriebsriemens 1 in Form eines Zahnriemens mit einem Grundkörper aus polymerem Material 2. In Längsrichtung X des Antriebsriemens 1 erstrecken sich einander parallel angeordnete Zugträger 4, die ein erstes Leitungselement 4 zur Stromführung bilden. Die Zugträger 4 laufen in einem Anschlussadapter 10, der beispielsweise durch einen CAN-Bus Stecker gebildet wird, zusammen. Der Anschlussadapter 10 bildet eine genormte Schnittstelle zum Einspeisen und bzw. oder Abgreifen elektrische Energie, die über die Zugträger 4 durch den Antriebsriemen 1 hindurch von einer Spannungsversorgung zu einem Verbraucher, beispielsweise einem Elektromotor, geleitet wird. Jeder Zugträger 4 ist über einen Pin des Anschlussadapters 10 einzeln kontaktiert. Die Kontaktierung des Kontaktierungselements mit dem Anschlussadapter kann hierbei nach einer der in den Fig. 1a bis 4b gezeigten Varianten erfolgen.

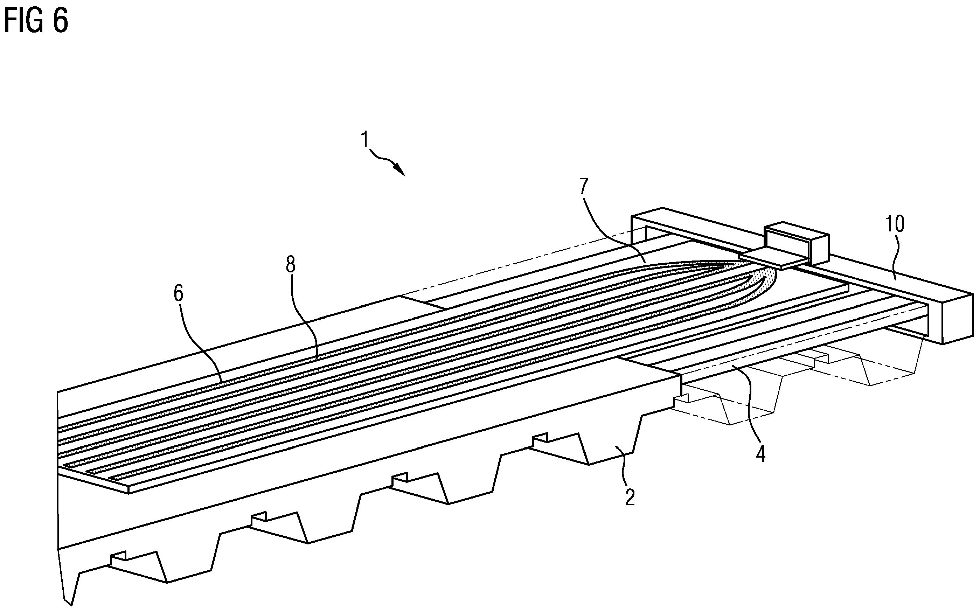

Figur 6 zeigt den erfindungsgemäßen Antriebsriemen 1 gemäß Figur 5, wobei neben den Zugträgern 4 als erstes Leitungselement 4 ein zweites Leitungselement 6 durch ein Substrat 7 mit auf dem Substrat 7 gedruckten Leiterbahnen 8 gebildet ist. Die Leiterbahnen 8 laufen gemeinsam mit den Zugträgern 4 in dem Anschlussadapter 10 zusammen. Neben den einzelnen Zugträgern 4 ist jeder Leiterbahn 8 ein Pin des Anschlussadapters 10 zugeordnet, sodass jeder Zugträger 4 und jede Leiterbahn 8 einzeln kontaktiert ist. Über den Anschlussadapter 10 können elektrische Energie und bzw. oder Daten in den Antriebsriemen 1 eingespeist und bzw. oder ausgelesen werden. Die Leiterbahnen 8 des zweiten Leitungselements 6 weisen wenigstens Bestandteile aus Kupfer, Silber oder Gold auf, wodurch die Leiterbahnen 8 eine im Vergleich zu den Zugträgern 4 des ersten Leitungselements 4 geringere Dämpfung aufweisen, was die Qualität der Signalübertragung über die Leiterbahnen 8 verbessert.

### Bezugszeichenliste (Teil der Beschreibung)

- 1: Antriebsriemen
- 2: Polymeres Material
- 4: Erstes Leitungselement, Zugträger
- 5: Wärmequelle
- 6: Zweites Leitungselement
- 7: Substrat
- 8: Leiterbahn
- 10: Anschlussadapter
- 12: Kontaktierungselement
- 14: Gabelförmige Zinken
- 16: zylindrische Hülse
- 18: Dorn
- 20: Draht

- F: Kraft
- X: Längsrichtung; Tiefe
- Y: Querrichtung; Breite
- Z: vertikale Richtung; Höhe
- X, Y: Horizontalen; horizontale Ebene

## Patentansprüche

1. Antriebsriemen (1), aufweisend ein in ein polymeres Material (2) eingebettetes erstes Leitungselement (4) zur Übertragung von elektrischer Energie,
wobei das erste Leitungselement (4) durch wenigstens einen sich in Längsrichtung (X) des Antriebsriemens (1) erstreckenden Zugträger (4), vorzugsweise eine Vielzahl sich in Längsrichtung (X) des Antriebsriemens (1) erstreckenden parallel zueinander angeordneten Zugträgern (4), gebildet ist,
wobei der Antriebsriemen (1) wenigstens ein zweites Leitungselement (6) zur Übertragung von Daten aufweist,
wobei das zweite Leitungselement (6) ein Substrat (7) mit darauf gedruckten Leiterbahnen (8) aufweist, **dadurch gekennzeichnet, dass** das zweite Leitungselement (6) eine im Vergleich zu dem ersten Leitungselement (4) geringere Dämpfung aufweist.

2. Antriebsriemen (1) nach Anspruch 1,
**dadurch gekennzeichnet, dass**
der Antriebsriemen (1) als Zahnriemen, Flachriemen, Keilriemen oder Keilrippenriemen ausgebildet ist.

3. Antriebsriemen (1) nach Anspruch 1 oder 2,
**dadurch gekennzeichnet, dass**
der Antriebsriemen (1) ein nicht geschlossener Antriebsriemen mit einer vorbestimmten Länge und zwei Enden ist.

4. Antriebsriemen (1) nach einem der vorhergehenden Ansprüche,
**dadurch gekennzeichnet, dass**
das Substrat (7) das polymere Material (2) des Antriebsriemens (1) aufweist, vorzugsweise daraus besteht.

5. Antriebsriemen (1) nach einem der vorhergehenden Ansprüche,
**dadurch gekennzeichnet, dass**
das Substrat (7) und insbesondere die Leiterbahnen (8) in das polymere Material (2) des Antriebsriemens (1) eingebettet ist.

6. Antriebsriemen (1) nach einem der vorhergehenden Ansprüche,
**dadurch gekennzeichnet, dass**
der Antriebsriemen (1) wenigstens einen Anschlussadapter (10) aufweist, der insbesondere an einem Ende des Antriebsriemens (1), bevorzugt an einer Stirnseite des Antriebsriemens (1) angeordnet ist, wobei das erste Leitungselement (4) und das zweite Leitungselement (6) in dem Anschlussadapter (10) zum Einspeisen und/oder Abgreifen der elektrischen Energie und der Daten zusammengeführt sind.

7. Antriebsriemen (1) nach Anspruch 6,
**dadurch gekennzeichnet, dass**
der Antriebsriemen (1) wenigstens ein Kontaktierungselement (12) aufweist, mit dem das erste Leitungselement (4) endseitig elektrisch verbunden ist, wobei das Kontaktierungselement (12) das erste Leitungselement (4) mit dem Anschlussadapter (10) verbindet.

8. Antriebsriemen (1) nach Anspruch 7,
**dadurch gekennzeichnet, dass**
das Kontaktierungselement (12) mit einem in den Anschlussadapter (10) mündenden Kabel verbunden ist.

9. Antriebsriemen (1) nach einem der Ansprüche 6 bis 8,
**dadurch gekennzeichnet, dass**
das Kontaktierungselement (12)
wenigstens ein Paar mit sich in vertikaler Richtung (Z) erstreckender gabelförmiger Zinken (14) zur Aufnahme wenigstens eines sich in Längsrichtung (X) des Antriebsriemens (1) erstreckenden Zugträgers (4) aufweist,
wobei das Kontaktierungselement (12) in vertikaler Richtung (Z) in das polymere Material (2) eingeführt ist.

10. Antriebsriemen (1) nach einem der Ansprüche 6 bis 8,
**dadurch gekennzeichnet, dass**
das Kontaktierungselement (12) wenigstens eine zylindrische Hülse (16) zur Aufnahme eines Zugträgers (4) aufweist,
wobei die zylindrische Hülse (16) in Längsrichtung (X) in das polymere Material (2) eingeführt ist und den Zugträger (4) auf einer Teillänge in Längsrichtung (X) umschließt,
wobei die zylindrische Hülse (16) auf den Zugträger (4) verpresst ist.

11. Antriebsriemen (1) nach einem der Ansprüche 6 bis 8,
**dadurch gekennzeichnet, dass**
das Kontaktierungselement (12) wenigstens einen Dorn (18) aufweist, der in Längsrichtung (X) in den Zugträger (4) eingeführt ist.

12. Antriebsriemen (1) nach einem der Ansprüche 6 bis 8,
**dadurch gekennzeichnet, dass**
das Kontaktierungselement (12) wenigstens eine insbesondere U-förmig ausgebildete Klammer aufweist, die in vertikaler Richtung (Z) in das polymere Material (2) eingeführt ist und den Zugträger (4) kontaktierend umgibt.

13. Linearantrieb mit einem Antriebsriemen (1) nach einem der Ansprüche 1 bis 12.

14. Regalbediengerät mit einem Linearantrieb nach Anspruch 13.

## Claims

1. A drive belt (1), comprising a first conductor element (4) embedded in a polymeric material (2) for transmitting electrical energy, wherein the first conductor element (4) is formed by at least one tensile member (4) extending in the longitudinal direction (X) of the drive belt (1), preferably a plurality of tensile members (4) extending in the longitudinal direction (X) of the drive belt (1) and arranged parallel to one another, wherein the drive belt (1) comprises at least one second conductor element (6) for transmitting data, wherein the second conductor element (6) comprises a substrate (7) having conductor tracks (8) printed thereon, **characterised in that** the second conductor element (6) has a lower attenuation than the first conductor element (4).

2. The drive belt (1) according to claim 1, **characterised in that** the drive belt (1) is configured as a toothed belt, flat belt, V-belt or V-ribbed belt.

3. The drive belt (1) according to claim 1 or 2, **characterised in that** the drive belt (1) is an openended drive belt having a predetermined length and two ends.

4. The drive belt (1) according to any one of the preceding claims, **characterised in that** the substrate (7) comprises the polymeric material (2) of the drive belt (1), and preferably consists thereof.

5. The drive belt (1) according to any one of the preceding claims, **characterised in that** the substrate (7), and in particular the conductor tracks (8), is embedded in the polymeric material (2) of the drive belt (1).

6. The drive belt (1) according to any one of the preceding claims, **characterised in that** the drive belt (1) comprises at least one connection adapter (10), which is arranged in particular at an end of the drive belt (1), preferably at an end face of the drive belt (1), wherein the first conductor element (4) and the second conductor element (6) are brought together in the connection adapter (10) for supplying and/or tapping off the electrical energy and the data.

7. The drive belt (1) according to claim 6, **characterised in that** the drive belt (1) comprises at least one contacting element (12), by means of which the first conductor element (4) is electrically connected at its end, wherein the contacting element (12) connects the first conductor element (4) to the connection adapter (10).

8. The drive belt (1) according to claim 7, **characterised in that** the contacting element (12) is connected to a cable which opens into the connection adapter (10).

9. The drive belt (1) according to any one of claims 6 to 8, **characterised in that** the contacting element (12) comprises at least one pair of fork-shaped prongs (14) extending in the vertical direction (Z) for receiving at least one tensile member (4) extending in the longitudinal direction (X) of the drive belt (1), wherein the contacting element (12) is inserted into the polymeric material (2) in the vertical direction (Z).

10. The drive belt (1) according to any one of claims 6 to 8, **characterised in that** the contacting element (12) comprises at least one cylindrical sleeve (16) for receiving a tensile member (4), wherein the cylindrical sleeve (16) is inserted into the polymeric material (2) in the longitudinal direction (X) and surrounds the tensile member (4) over a partial length in the longitudinal direction (X), wherein the cylindrical sleeve (16) is crimped onto the tensile member (4).

11. The drive belt (1) according to any one of claims 6 to 8, **characterised in that** the contacting element (12) comprises at least one mandrel (18), which is inserted into the tensile member (4) in the longitudinal direction (X).

12. The drive belt (1) according to any one of claims 6 to 8, **characterised in that** the contacting element (12) comprises at least one clip, which is configured in particular in a U-shape, is inserted into the polymeric material (2) in the vertical direction (Z), and surrounds the tensile member (4) in contacting engagement therewith.

13. A linear drive comprising a drive belt (1) according to any one of claims 1 to 12.

14. A storage and retrieval machine comprising a linear drive according to claim 13.

## Revendications

1. Courroie d'entraînement (1), comprenant un premier élément conducteur (4) noyé dans un matériau polymère (2) pour la transmission d'énergie électrique, le premier élément conducteur (4) étant formé par au moins un élément de traction (4) s'étendant dans la direction longitudinale (X) de la courroie d'entraînement (1), de préférence par une pluralité d'éléments de traction (4) s'étendant dans la direction longitudinale (X) de la courroie d'entraînement (1) et disposés parallèlement les uns aux autres, la courroie d'entraînement (1) comprenant au moins un deuxième élément conducteur (6) pour la transmission de données, le deuxième élément conducteur (6) comprenant un substrat (7) sur lequel sont imprimées des pistes conductrices (8), **caractérisée en ce que** le deuxième élément conducteur (6) présente une atténuation inférieure à celle du premier élément conducteur (4).

2. Courroie d'entraînement (1) selon la revendication 1, **caractérisée en ce que** la courroie d'entraînement (1) est réalisée sous la forme d'une courroie dentée, d'une courroie plate, d'une courroie trapézoïdale ou d'une courroie striée.

3. Courroie d'entraînement (1) selon la revendication 1 ou 2, **caractérisée en ce que** la courroie d'entraînement (1) est une courroie d'entraînement ouverte ayant une longueur prédéterminée et deux extrémités.

4. Courroie d'entraînement (1) selon l'une quelconque des revendications précédentes, **caractérisée en ce que** le substrat (7) comprend le matériau polymère (2) de la courroie d'entraînement (1), et de préférence est constitué de celui-ci.

5. Courroie d'entraînement (1) selon l'une quelconque des revendications précédentes, **caractérisée en ce que** le substrat (7), et en particulier les pistes conductrices (8), est noyé dans le matériau polymère (2) de la courroie d'entraînement (1).

6. Courroie d'entraînement (1) selon l'une quelconque des revendications précédentes, **caractérisée en ce que** la courroie d'entraînement (1) comprend au moins un adaptateur de raccordement (10), qui est disposé notamment à une extrémité de la courroie d'entraînement (1), de préférence sur une face d'extrémité de la courroie d'entraînement (1), le premier élément conducteur (4) et le deuxième élément conducteur (6) étant réunis dans l'adaptateur de raccordement (10) pour injecter et/ou prélever l'énergie électrique et les données.

7. Courroie d'entraînement (1) selon la revendication 6, **caractérisée en ce que** la courroie d'entraînement (1) comprend au moins un élément de contact (12), au moyen duquel le premier élément conducteur (4) est relié électriquement à son extrémité, l'élément de contact (12) reliant le premier élément conducteur (4) à l'adaptateur de raccordement (10).

8. Courroie d'entraînement (1) selon la revendication 7, **caractérisée en ce que** l'élément de contact (12) est relié à un câble qui débouche dans l'adaptateur de raccordement (10).

9. Courroie d'entraînement (1) selon l'une quelconque des revendications 6 à 8, **caractérisée en ce que** l'élément de contact (12) comprend au moins une paire de dents en forme de fourche (14) s'étendant dans la direction verticale (Z), destinée à recevoir au moins un élément de traction (4) s'étendant dans la direction longitudinale (X) de la courroie d'entraînement (1), l'élément de contact (12) étant introduit dans le matériau polymère (2) dans la direction verticale (Z).

10. Courroie d'entraînement (1) selon l'une quelconque des revendications 6 à 8, **caractérisée en ce que** l'élément de contact (12) comprend au moins une douille cylindrique (16) destinée à recevoir un élément de traction (4), la douille cylindrique (16) étant introduite dans le matériau polymère (2) dans la direction longitudinale (X) et entourant l'élément de traction (4) sur une partie de sa longueur dans la direction longitudinale (X), la douille cylindrique (16) étant sertie sur l'élément de traction (4).

11. Courroie d'entraînement (1) selon l'une quelconque des revendications 6 à 8, **caractérisée en ce que** l'élément de contact (12) comprend au moins un mandrin (18), qui est introduit dans l'élément de traction (4) dans la direction longitudinale (X).

12. Courroie d'entraînement (1) selon l'une quelconque des revendications 6 à 8, **caractérisée en ce que** l'élément de contact (12) comprend au moins une agrafe, réalisée notamment en forme de U, qui est introduite dans le matériau polymère (2) dans la direction verticale (Z) et entoure l'élément de traction (4) en étant en contact avec celui-ci.

13. Entraînement linéaire comprenant une courroie d'entraînement (1) selon l'une quelconque des revendications 1 à 12.

14. Transstockeur comprenant un entraînement linéaire selon la revendication 13.
